# EUROPEAN PATENT APPLICATION

(11) **EP 4 768 112 A1**
(43) Date of publication of application: **01.07.2026**
(21) Application number: 25222519.8
(22) Date of filing: 11.12.2025
(51) Int. Cl.: B01D 46/00, B01D 46/24, B24B 9/14, B24B 13/00

(54) **FILTERING DEVICE FOR PURIFYING THE AIR PRESENT IN AN OPHTHALMIC LENS PROCESSING ENVIRONMENT**

(30) Priority: 24.12.2024 IT 202400029982
(71) Applicant: Nalesso, Valerio, 37040 Terrazzo (VR) (IT)
(72) Inventor: Nalesso, Valerio, 37040 Terrazzo (VR) (IT)
(74) Representative: Contadin, Giorgio

(57) **Abstract**

A filtering device (1) for purifying the air present in an ophthalmic lens processing environment comprising a flow distribution head (2) provided with an outlet fitting (3) and an inlet fitting (4) suitable to communicate directly or indirectly with a usage tank in free contact with an ophthalmic lens processing environment, arranged in a lower room beneath a work bench accessible to an operator, so that the usage tank is underneath a grinding machine for processing ophthalmic lenses and collects by gravity a processing and cooling liquid which conveys with it the impurities produced by the processing of the ophthalmic lenses by the grinding machine, an outer container (5) coupled to the distribution head (2) and having an inner volume (6) communicating with the inlet fitting (4), air purification means (7) arranged in the inner volume (6) of the outer container (5) and communicating with the inlet fitting (4), air filtering means (8), communicating with the outlet fitting (3) and arranged inside the outer container (5) and cooperating with the purification means (7) in such a way as to receive from the purification means (7) the air coming from the inlet fitting (4) and yet purified by the purification means (7), and ventilation means (9) operatively connected to the filtering means (8) and suitable to direct the purified air outside the flow distribution head (2) through the outlet fitting (3).

## Description

The present invention relates to a filtering device for purifying the air present in an environment (or room) where ophthalmic lenses, particularly made of glass or plastic material (such as, for instance, the plastic polymer polyallyl-diglycol-carbonate - also known as PADC or CR39 - belonging to the polyester class or the polycarbonate or even the urethane-based monomer known by the trade name "*Trivex*"; in case of plastic lenses, it is commonly and by way of example, albeit improperly, also referred to as lenses made of organic material) are processed. The air purification device of the present invention is suitable for closed environments, typically optical laboratories or opticians' shops, where machines known in jargon as "grinders" (more properly "grinding wheels") are used to process ophthalmic lenses, with the aim to eliminate the unpleasant and pervasive, often nauseating, odor that spreads throughout these environments during the mechanical processing of ophthalmic lenses by these grinders.

It is known that grinders, or grinding wheels, are manual or automatic devices that have long been used, especially in optical laboratories, to produce shaped ophthalmic lenses of all kinds, from the more traditional, so-called rimmed, ones to the more complex ones, such as lenses suitable for "nylor" frames (i.e., frames that do not support the lower edge of the lens, which is generally held in place by a flexible wire) or the wraparound frames of sports glasses.

These machines are mounted or housed above a work surface (or bench) set up in the optical laboratory and accessible to the operator for the relevant processing of ophthalmic lenses: beneath the work surface, essentially at or near the grinder, a usage tank is particularly arranged where a cooling liquid, typically water, directed toward the grinder processing tool to prevent its inappropriate and harmful overheating, is collected by gravity.

The processing liquid, inevitably soiled or contaminated due to the collection and conveyance of the glass or plastic waste which the grinder tool, as it processes ophthalmic lenses, produces by abrasion, reaches the optical laboratory's usage tank passing thorough a dedicated drain pipe.

Typically, the cooling liquid used by grinders in optical laboratories and subsequently collected in the usage tank beneath the work surface is purified of impurities and recirculated, though a pump, for a subsequent processing cycle following specific operating methods which make use of respective systems and/or devices and which are characterized each of their own specific features, performance and even critical issues already widely addressed in the field. However, the current state of the art still poses the significant problem of absorbing the highly impactful, unhealthy and unpleasant odors that ophthalmic lens processing generates in the closed environment.

Those odors, especially in a licensed premises (such as an eyeglass shop) that welcomes multiple people, even simultaneously, cause both feelings of discomfort and a perceived lack of adequate hygienic-sanitary conditions for people and a loss of image for the owner of the licensed premises, which inevitably negatively impacts on the satisfaction and credibility level of the services offered and the hospitality standard within the environment itself.

Starting from an awareness of the aforesaid drawbacks of the prior art, the present invention aims to effectively address them.

More specifically, main purpose of the invention is to provide a filtering device that, unlike what is offered by the prior art in the sector, allows for effective and immediate purification of the air present in a closed environment where ophthalmic lenses are processed.

In other words, primary purpose of the present invention is to provide a filtering device for purifying air that quickly and effectively makes the air in a closed ophthalmic lens processing environment healthier and more wholesome than currently available.

In the cognitive sphere of this first purpose, it is task of the present invention to provide a filtering device for purifying the air present in an ophthalmic lens processing environment which allows the closed environment to be constantly welcoming, especially for customers, at least in terms of the air breathable into it.

It is also task of the invention to develop a filtering device for purifying the air present in an ophthalmic lens processing environment which allows the owner or manager of the closed environment to keep a level of image, credibility and customer satisfaction at least adequate, in any case better than that one currently achievable, always referring to the healthiness of the breathable air into it. Another purpose of the present invention is to design a filtering device for purifying the air present in an ophthalmic lens processing environment that can be easily installed according to individual needs in any practical application situation.

Said purposes are achieved by means of a filtering device for purifying the air present in an ophthalmic lens processing environment according to the attached claim 1, to which reference is made for the sake of brevity.

Further constructive technical detail features of the filtering device for purifying the air present in an ophthalmic lens processing environment of the present invention are contained in the related dependent claims.

The aforesaid claims, specifically and concretely defined below, are to be considered integral part of the present description.

Advantageously, the filtering device of the present invention effectively allows to purify the air in an ophthalmic lens processing environment, typically an optical laboratory, an optical center, or an optical retail outlet.

This favorably because the filtering device of the invention comprises:
- a flow distribution head provided with an outlet fitting and an inlet fitting suitable to communicate directly or indirectly with a usage tank in free contact with the environment, located in a lower room beneath a work bench accessible to an operator, such that the usage tank is located beneath a grinding machine for processing ophthalmic lenses and collects by gravity a processing and cooling liquid which conveys with it the impurities produced by the processing of the ophthalmic lenses by such a grinding machine;
- an outer container coupled to the flow distribution head and having an inner volume communicating with the inlet fitting;
- air purification means arranged inside the inner volume of the outer container and communicating with the inlet fitting;
- air filtering means, communicating with the outlet fitting and arranged inside the outer container and cooperating with the purification means in such a way as to receive from the purification means the air coming from the inlet fitting and yet purified by the purification means;
- ventilation means operatively connected to the filtering means and suitable to direct the purified air outside the flow distribution head through the outlet fitting.

Still advantageously, again by virtue of the essential technical features just highlighted, the filtering device of the invention allows for the maintenance of healthier air conditions in a closed ophthalmic lens processing environment compared to the current state of the art, making the time spent in the closed environment more pleasant for both operators and staff who habitually frequent it and for people (typically customers) who occasionally and temporarily access it. Equally advantageously, the filtering device of the present invention allows the operator of the closed environment in which it is installed to constantly and immediately offer a level of hospitality better than that one found in the prior art, with a consequent positive impact on the image and credibility associated with that environment, often consisting of a shop with significant aesthetic features and high people frequency.

Said purposes and advantages, as well as others that will emerge throughout the paper, will become more evident from the following description, relating to a preferred embodiment of the filtering device for purifying the air present in an ophthalmic lens processing environment of the invention, given by way of example but not limitation, with reference to the attached drawings in which:
- figures 1-3 are three separate assonometric views of the filtering device for purifying the air present in an ophthalmic lens processing environment of the invention;
- figure 4 is an exploded and simplified assonometric view (without the air purification means) of the filtering device of figure 1;
- figures 5-7 are three separate explanatory assonometric views of the filtering device of figure 1;
- figure 8 is a top assonometric view of the filtering device of figure 1;
- figures 9-12 are four separate assonometric views of a first constructive detail of the filtering device of figure 1;
- figure 13 is an assonometric view of a first assembly of figure 4;
- figure 14 is a top plan view of a second assembly of figure 1;
- figure 15 is an exploded and truncated assonometric view of figure 14;
- figure 16 is an assonometric view of a first enlarged constructive detail of figure 4 or figure 14;
- figure 17 is a plan view of a second enlarged constructive detail of figure 4 or figure 14.

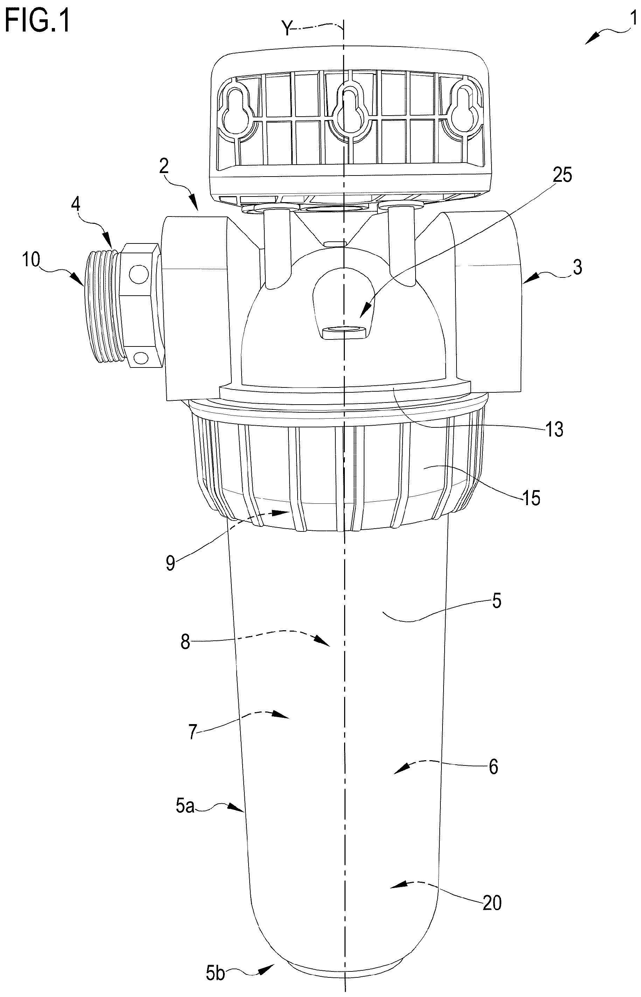

The filtering device, specifically used to purify the air present in an ophthalmic lens processing environment (or laboratory), is shown in three separate assonometric views in figures 1-3, where it is globally indicated by reference number 1.

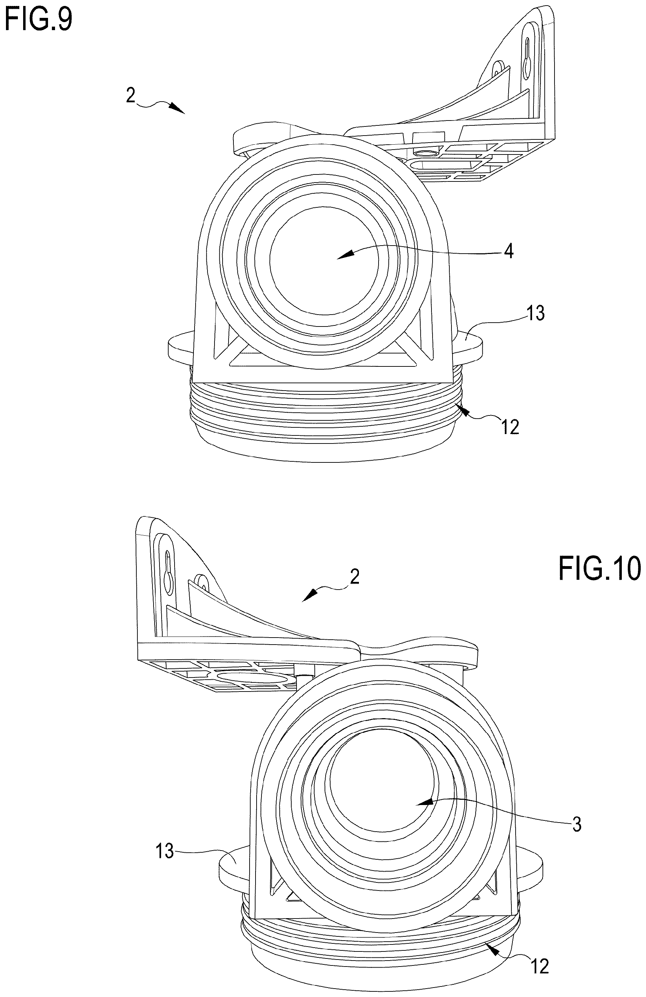

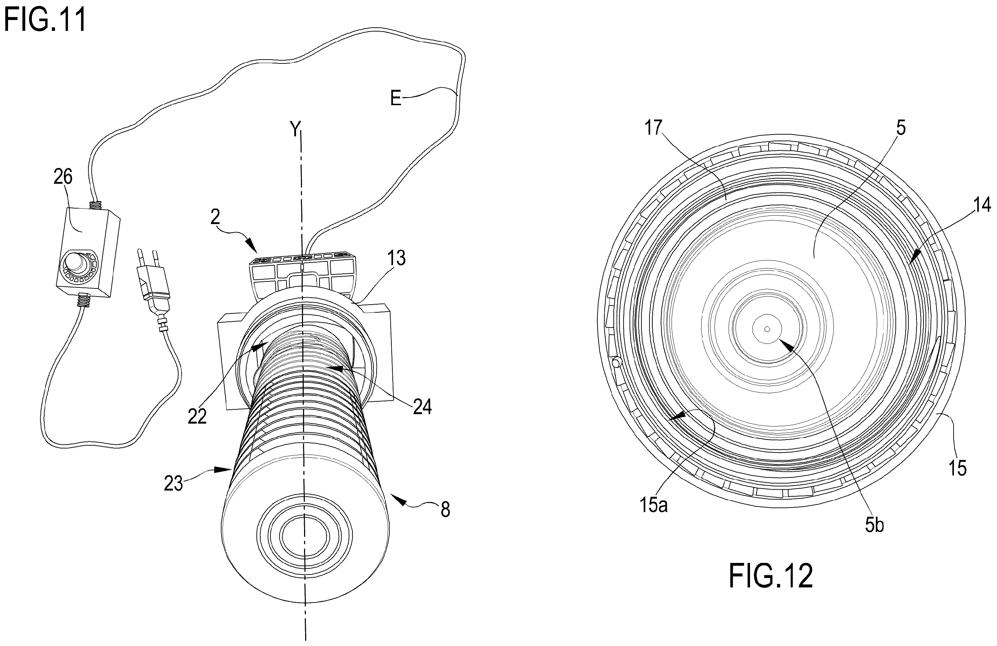

In accordance with the invention, the filtering device 1 comprises:
- a flow distribution head 2, illustrated separately at figures 9-12, provided with an outlet fitting 3 and an inlet fitting 4 suitable to communicate directly or indirectly with a usage tank, not illustrated in the accompanying figures, in free contact with the environment, arranged in a lower room beneath a work bench (also not visible in the accompanying figures) accessible to an operator, such that the usage tank is underneath a grinding machine (not shown) for processing ophthalmic lenses and collects by gravity a processing and cooling liquid, which carries away the impurities produced by the processing of those ophthalmic lenses by the grinding machine itself;
- an outer container 5 coupled to the flow distribution head 2 and having an inner volume 6 communicating with the inlet fitting 4;
- air purification means, collectively numbered with 7, arranged in the inner volume 6 (or, more simply, contained inside) of the outer container 5 and communicating with the inlet fitting 4;
- air filtering means, collectively indicated with 8, communicating with the outlet fitting 3 and also arranged inside the outer container 5 and cooperating with the air purification means 7 in such a way as to receive from the latter the air coming from the inlet fitting 4 and yet purified by the purification means 7;
- ventilation means, collectively and by way of example indicated by 9, operatively connected to the air filtering means 8 and suitable to direct the purified air outside the flow distribution head 2 through the outlet fitting 3.

In particular manner, the outlet fitting 3 is preferably positioned opposite the inlet fitting 4 so that the outlet fitting 3 and the inlet fitting 4 are symmetrically arranged with respect to a central symmetry axis Y (as best seen from figure 9) of the flow distribution head 2, which effectively represents a sort of distribution valve. Preferably but not necessarily, the inlet fitting 4 is provided at a front mouth 10 with a closing filter cap (with a thin and extremely fine mesh structure), not illustrated for the sake of explanation simplicity, normally suitable to allow the passage of air only and, when the filtering device 1 is not in use or not functioning, access to the inner volume 6 of the outer container 5 to allow maintenance, integration, restoration and/or replacement of at least the air purification means 7.

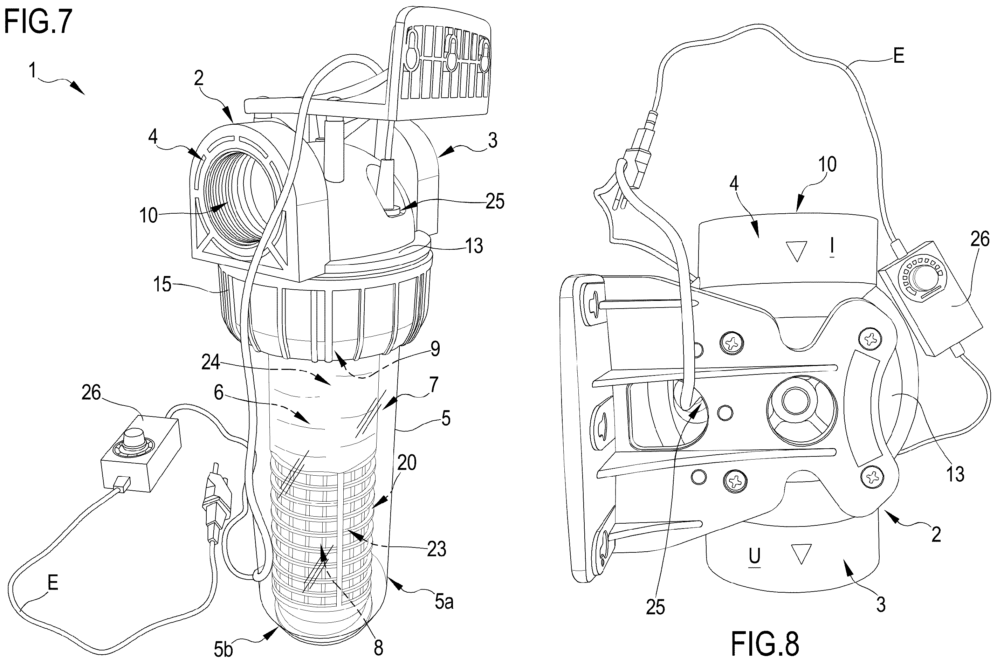

As shown in figures 1-7, in preferred but not limitative way, the outer container 5 protrudes vertically from the flow distribution head 2 along the aforesaid central symmetry axis Y defined by the flow distribution head 2 itself: particularly, in installation conditions, the outer container 5 conventionally protrudes downwardly. Furthermore, still as a preferred although advantageous option, the outer container 5 is removably coupled to the flow distribution head 2 through first fastening means, collectively indicated by 11.

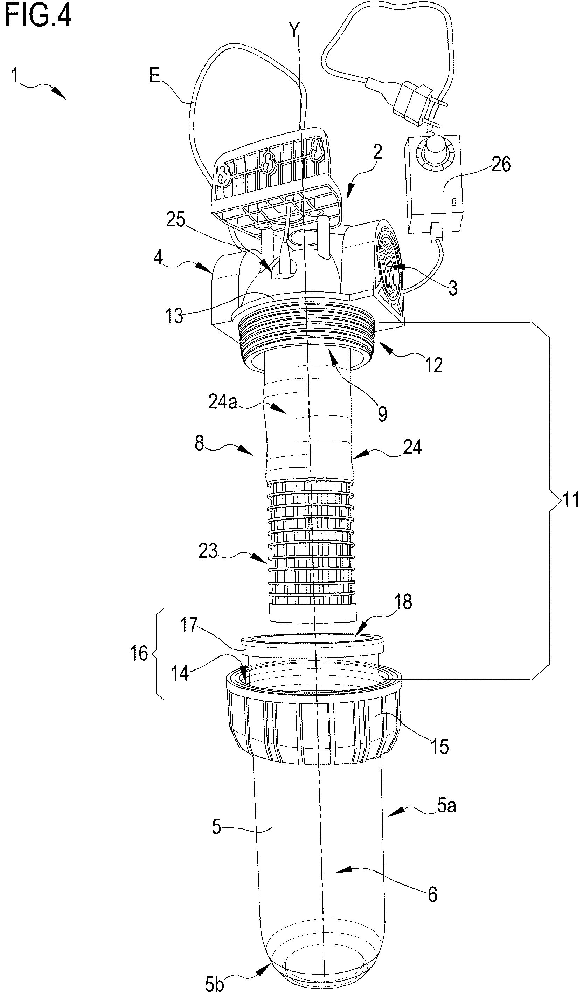

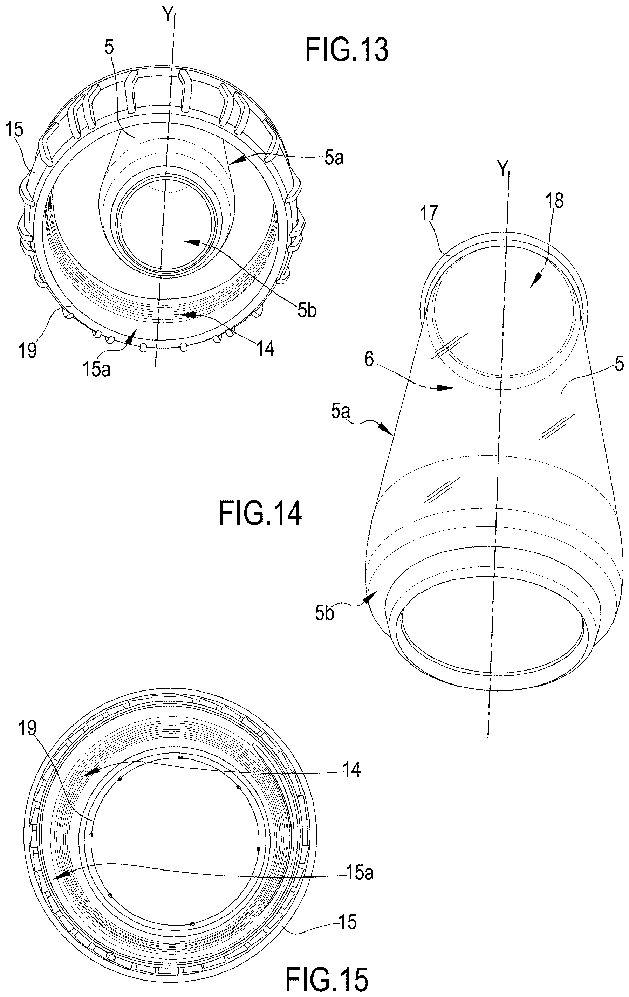

Figure 4 and also, in greater detail, figures 13 and 14 highlight that, preferably but not limited to, the first fastening means 11 comprise in this specific case:
- an axial screw 12 made externally in a central annular fitting 13 interposed between the inlet fitting 4 and the outlet fitting 3 of said distribution head 2, with which, preferably, it is monolithic;
- an axial nut screw 14 engaging with the axial screw 12 and made internally in a ring nut 15 integral with the outer container 2 and suitable to be rotated around the central symmetry axis Y of the flow distribution head 2 in a first direction, so as that the axial nut screw 14 progressively engages the axial screw 12 until it defines for the ring nut 15 an operating position, in which the outer container 5 is stably coupled to the distribution head 2, and in a second direction, opposite to the first direction, so as that the axial nut screw 14 progressively disengages the axial screw 12 until it defines for the ring nut 15 a release position in which the outer container 5 is decoupled from the distribution head 2 and the inner volume 6 of the outer container 5 and the air filtering means 8 are accessible to a user, for maintenance operations of the air purification means 7 and air filtering means 8, respectively, for instance.

Preferably, the ring nut 15 is removably coupled to the outer container 5, from which it can be axially slipped off; this in order to ease replacement of only the latter in the event of wear or damage, for any reason, of the outer container 5. More specifically, the ring nut 15 is made integral with the outer container 5 by means of support means, collectively numbered with 16 and configured to achieve the removable coupling between the two aforesaid components of the filtering device 1 of the invention.

Particularly, as can be seen more precisely in figures 15-17, those support means 16 preferably but not exclusively comprise:
- an annular edge 17 protruding from the outer wall 5a of the outer container 5 at an access opening 18 of the outer container 5 through which the air purification means 7 are introduced into the outer container 5 coming from the inlet fitting 4;
- an annular step 19 protruding from the inner wall 15a of the ring nut 15 and arranged near the axial nut screw 14; the annular edge 17 thus contacts against the annular step 19 in the operating position (also shown in figure 14) of the ring nut 15 and is dragged by the ring nut 15 when moving from the operating position to the release position (visible in the exploded view of figure 4) and vice versa.

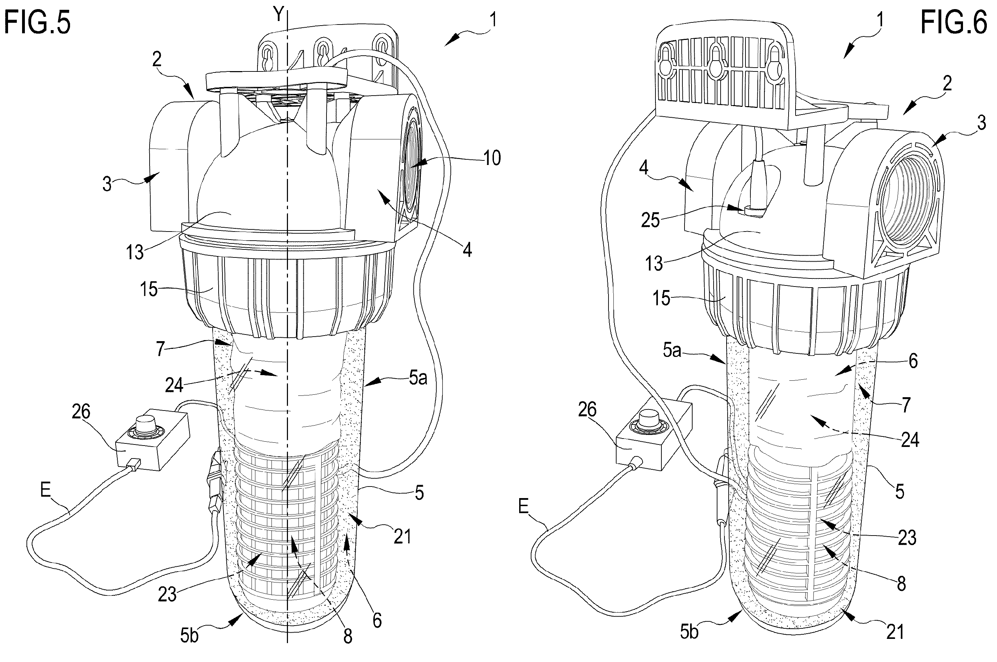

As simplified figures 5-7 illustrate, the outer container 5 (shown in transparency for purely explanatory purposes) and the air filtering means 8 define in the inner volume 6 of the outer container 5 itself an annular chamber 20 which surrounds the air filtering means 8 and houses the air purification means 7.

It follows that the air purification means 7 are, in this case, arranged around the air filtering means 8 (excluding the upper part of the latter) and occupy the annular chamber 20 of the inner volume 6 of the outer container 5 up to the access opening 18 of the outer container 5 which, under normal conditions of use of the filtering device 1 of the invention, communicates only with the inlet fitting 3 of the flow distribution head 2.

Preferably but not necessarily, the air purification means 7 comprise activated carbon present in granules 21 (as shown in particular again in the attached figures 5, 6 and 7), or in cloths wrapped in layers and/or in proper combinations thereof.

With reference to the air filtering means 8, figures 4-7 show in detail that they are arranged predominantly near a terminal base 5b of the outer container 5, so that the purified air is conveyed towards the outlet fitting 3 only after having been treated by, or having encountered in its path, the air filtering means 7 and having been forced towards such a terminal base 5b.

Thus, the design of the invention filtering device 1 properly prevents the air to be purified, as it flows in the device itself, from bypassing the air purification means 7. In a preferred but not binding way, even the air filtering means 8 are removably coupled to the flow distribution head 2 through second fastening means, as a whole indicated by 22 and visible at least partly from the combined arrangement of figures 10 and 13.

According to the preferred embodiment described herein of the invention, the air filtering means 8 comprise, as can be observed in figures 4-7 and 13:
- a filter cartridge 23 equipped with a micro-perforated reticular structure suitable to allow the passage of purified air;
- a tubular body 24 communicating with the filter cartridge 23 and housing the ventilation means 9, and featuring a continuous and full external surface 24a which is hit by the flow of air entering the inner volume 6 of the outer container 5 through the inlet fitting 4 before it reaches the filter cartridge 23; this ensures that the flow of air to be purified is appropriately diverted towards the air purification means 7.

Preferably but not necessarily, the tubular body 24 is in this case monolithic, i.e., made as a single body, with the filter cartridge 23, while remaining understood that further embodiments of the filtering device of the invention, not illustrated in the attached drawings, may provide for the tubular body to be a separate and distinct component from the filter cartridge to which it will be firmly coupled, for example through interlocking means or screw means.

Moreover, advantageously, the tubular body 24 is coaxial with the filter cartridge 23 and concentric with the outer container 5, along the central symmetry axis Y of the flow distribution head 2.

Regarding the ventilation means 9 introduced before, they comprise a suction fan or a blowing fan (not shown for expositive simplicity but of the type per se known in this type of applications where installation space is minimal, in the order of a few centimeters) operatively connected to actuation means, not shown and suitable to activate it to cause purification of the air present in the closed environment (such as, as said, the operating room of an optical laboratory or optician's shop).

By way of example and indication, the actuation means comprise an electric motor stably housed in the tubular body 24 of the air filtering means 8 and suitable to be electrically connected to an electric power line through an electric cable E coupled to a power socket 25 made in the flow distribution head 2.

As figures 5 to 8 and figure 13 illustrate, the electric motor is preferably electrically connected to a voltage regulator 26 suitable to vary the speed of the ventilation means 9 and the related suction/blowing capacity, depending on the quantity of air purification means 7 (in particular, the activated carbon granules 21) contained in the outer container 5.

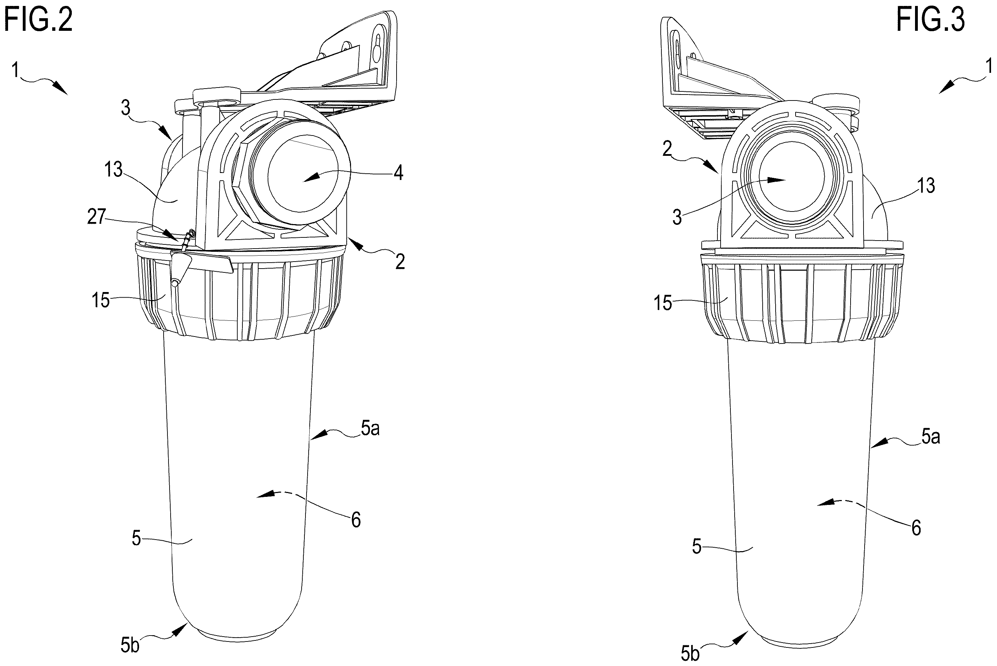

Preferably but not limitedly, the filtering device 1 of the invention also comprises sealing means, as a whole indicated with 27 and visible in figure 2, interposed between the flow distribution head 2 and the air purification means 7 and suitable to prevent accidental separation of the air purification means 7 from the distribution head 2.

The present invention also relates to a generic filtering assembly for purifying the air present in a closed ophthalmic lens processing environment, comprising a usage tank in free contact with the environment, arranged in a lower room beneath a work bench accessible to an operator, such that said usage tank is underneath a grinding machine for processing ophthalmic lenses and collects by gravity a processing and cooling liquid which conveys with it the impurities produced by the processing of said ophthalmic lenses by the grinding machine. Such a filtering assembly also includes, for instance, additional filtering means, not shown, coupled in some way to the tank through a channeling plant, not yet shown in the attached drawings, so that, under operating conditions, those additional filtering means communicate with the inner volume of the usage tank and can purify the processing liquid retaining impurities when run by the processing liquid. In this case, the filtering assembly also, preferably, comprises pumping means suitable to be operated to convey the processing liquid to be purified to the usage tank, passing through the additional filtering means so that the purified processing liquid reaches the usage tank directly and immediately, as well as actuator means operatively connected to the pumping means to regulate operation thereof. According to the invention, such a filtering assembly comprises a filtering device 1 for purifying the air present in an ophthalmic lens processing environment, installed downstream a usage tank and of the type previously described, especially in relation to its essential technical features, which can be listed as follows:
- the flow distribution head 2 provided with the outlet fitting 3 and the inlet fitting 4 suitable to communicate directly or indirectly with a usage tank in free contact with the environment, arranged in a lower room beneath a work bench accessible to an operator, such that the usage tank is underneath a grinding machine for processing ophthalmic lenses and collects by gravity a processing and cooling liquid that conveys with it the impurities produced by the processing of ophthalmic lenses by the aforesaid grinding machine;
- the outer container 5 coupled to the flow distribution head 2 and having an inner volume 6 communicating with the inlet fitting 4;
- the air purification means 7 arranged in the inner volume 6 of the outer container 5 and communicating with the inlet fitting 4;
- the air filtering means 8, communicating with the outlet fitting 3 and arranged inside the outer container 5 and cooperating with the air purification means 7 in such a way as to receive from the purification means 7 themselves the air coming from the inlet fitting 4 and yet purified by the purification means 7;
- the actuation means 9 coupled to the filtering means 8 and suitable to direct or convey the purified air outside the flow distribution head 2 through the outlet fitting 3.

By virtue of the description provided above, it is therefore clear that the filtering device for purifying the air present in an ophthalmic lens processing environment, object of the present invention, achieves the purposes and reaches the advantages mentioned above.

The system envisaged by the invention is thus advantageously configured to, in order, force air (by means of suction or blowing) from the environment into a filtering device, filter it, and release it purified into the same environment where an ophthalmic lens processing bench is located.

Upon implementation, changes could be made to the filtering device of the invention, used for purifying the air present in an ophthalmic lens processing environment, consisting, for example, of air purification means of a type different from that one described above, particularly with reference to the attached figures. In this regard, it is emphasized that the filtering device of the present invention can be installed in multiple units arranged in series, thus resulting modular under application; it is thus possible to envisage installing, for example, a first filtering device according to the invention, in which the air purification means comprise zinc ricinoleate waxy beads for an initial air purification action, a second filtering device according to the invention, positioned downstream the first filtering device, in which the air purification means comprise carbon granules for a second - primary and more significant - air purification action, and a third filtering device according to the invention, positioned downstream the second filtering device, in which the air purification means comprise a fragrance diffuser for a final purification and aromatization action of the air to be reintroduced into the environment.

In addition, in further embodiments of the filtering device as falling in the following claims, the air purification means may be different from those highlighted above and visible in the following figures, which does not affect the advantage provided by the present invention.

It is finally clear that many other variants may be made to the filtering device for purifying the air present in an ophthalmic lens processing environment concerned, falling within the scope of the appended claims, just as it is clear that in the practical implementation of the invention, materials, shapes and sizes of the details shown may be any, according to the requirements, and may be replaced by other technically equivalent elements.

Where the constructive features and techniques mentioned in the claims below are followed by references signs or numerals, such reference signs were introduced for the sole purpose of increasing the intelligibility of the claims themselves, and therefore, such reference signs have no limiting effect on the interpretation of each element identified, by way of example only, by those reference signs.

## Claims

1. Filtering device (1) for purifying the air present in an ophthalmic lens processing environment **characterized in that** it comprises:
- a flow distribution head (2) provided with an outlet fitting (3) and an inlet fitting (4) suitable to communicate directly or indirectly with an exhaust pipe of a grinding machine for processing ophthalmic lenses and/or with a usage tank in free contact with an ophthalmic lens processing environment, arranged in a lower room beneath a work bench accessible to an operator, so that said usage tank is underneath a grinding machine for processing ophthalmic lenses and collects by gravity a processing and cooling liquid which conveys with it the impurities produced by the processing of said ophthalmic lenses by said grinding machine;
- an outer container (5) coupled to said distribution head (2) and having an inner volume (6) communicating with said inlet fitting (4);
- air purification means (7) arranged in said inner volume (6) of said outer container (5) and communicating with said inlet fitting (4);
- air filtering means (8), communicating with said outlet fitting (3) and arranged inside said outer container (5) and cooperating with said purification means (7) in such a way as to receive from said purification means (7) said air coming from said inlet fitting (4) and yet purified by said purification means (7);
- ventilation means (9) operatively connected to said filtering means (8) and suitable to direct said purified air outside said flow distribution head (2) through said outlet fitting (3).

2. Device (1) according to claim 1), **characterized in that** said inlet fitting (4) is provided at a front mouth (10) with a closing filter cap suitable to allow the passage of said air.

3. Device (1) according to any of the preceding claims, **characterized in that** said outer container (5) is removably coupled to said flow distribution head (2) through first fixing means (11).

4. Device (1) according to claim 3), **characterized in that** said first fixing means (11) comprise:
- an axial screw (12) made externally in a central annular fitting (13) interposed between said inlet fitting (4) and said outlet fitting (3) of said flow distribution head (2);
- an axial nut screw (14) engaging with said axial screw (12) and made internally in a ring nut (15) integral with said outer container (5) and suitable to be rotated around a central symmetry axis (Y) of said flow distribution head (2) in a first direction, in such a way that said axial nut screw (14) engages said axial screw (12) until it defines for said ring nut (15) an operating position, in which said outer container (5) is stably coupled to said distribution head (2), and in a second direction, opposite to said first direction, in such a way that said axial nut screw (14) disengages said axial screw (12) until it defines for said ring nut (15) a release position in which said outer container (5) is released from said distribution head (2) and said inner volume (6) of said outer container (5) is accessible to the user.

5. Device (1) according to claim 4), **characterized in that** said ring nut (15) is removably coupled to said outer container (5).

6. Device (1) according to claim 4) or 5), **characterized in that** said ring nut (15) is made integral with said outer container (5) through support means (16).

7. Device (1) according to claim 6), **characterized in that** said support means (16) comprise:
- an annular edge (17) protruding from the outer wall (5a) of said outer container (5) at an access opening (18) of said outer container (5) through which said air purification means (7) are introduced into said outer container (5);
- an annular step (19) protruding from the inner wall (15a) of said ring nut (15) and arranged in proximity to said axial nut screw (14), said annular edge (17) contrasting against said annular step (19) in said operating position of said ring nut (15) and being dragged by said ring nut (15) in the passage from said operating position to said release position and vice versa.

8. Device (1) according to any of the preceding claims, **characterized in that** said outer container (5) and said air filtering means (8) define in said inner volume (6) of said outer container (5) an annular chamber (20) which surrounds said air filtering means (8) and houses said air purification means (7).

9. Device (1) according to claim 8), **characterized in that** said air purification means (7) are arranged around said air filtering means (8) and occupy said annular chamber (20) of said inner volume (6) of said outer container (5) up to an access opening (18) of said outer container (5).

10. Device (1) according to any of the preceding claims, **characterized in that** said air purification means (7) comprise activated carbons present in granules (21), in cloths wrapped in layers and/or in combinations thereof.

11. Device (1) according to any of the preceding claims, **characterized in that** said air filtering means (8) are arranged in proximity to a terminal bottom (5b) of said outer container (5), in such a way that said purified air is conveyed towards said outlet fitting (3) only after having been treated by, or having encountered in its path, said air purification means (7) and having been forced towards said terminal bottom (5b).

12. Device (1) according to any of the preceding claims, **characterized in that** said air filtering means (8) comprise:
- a filter cartridge (23) provided with a micro-perforated reticular structure suitable to allow the passage of said purified air;
- a tubular body (24) communicating with said filter cartridge (23) and housing said ventilation means (9) and having a continuous and full external surface (24a) which is hit by the flow of said air entering said inner volume (6) of said outer container (5) through said inlet fitting (4) before said filter cartridge (23), in such a way as to divert said flow of said air to be purified towards said air purification means (7).

13. Device (1) according to claim 12), **characterized in that** said tubular body (24) is made in single body with said filter cartridge (23).

14. Device (1) according to any of the preceding claims, **characterized in that** said ventilation means (9) comprise a suction fan or a blowing fan operatively connected to actuation means suitable to activate it to determine the purification of said air present in said environment.

15. Device (1) according to claim 14) when dependent on claim 12), **characterized in that** said actuation means include an electric motor stably housed in said tubular body (24) of said air filtering means (8) and suitable to be electrically connected to an electric power line through an electric cable (E) coupled to a power socket (25) made in said flow distribution head (2).

16. Device (1) according to any of the preceding claims, **characterized in that** it comprises sealing means (27) interposed between said distribution head (2) and said air purification means (7) and suitable to prevent the accidental separation of said air purification means (7) from said flow distribution head (2).

17. Filtering assembly for purifying the air present in an ophthalmic lens processing environment comprising an exhaust pipe of a grinding machine for processing ophthalmic lenses and/or a usage tank in free contact with an ophthalmic lens processing environment, arranged in a lower room underneath a work bench accessible to an operator, in such a way that said usage tank is underneath said grinding machine and collects by gravity a processing and cooling liquid which conveys with it the impurities produced by the processing of said ophthalmic lenses by said grinding machine, **characterized in that** it comprises a filtering device (1) for purifying the air present in said ophthalmic lens processing environment, installed downstream said exhaust pipe of said grinding machine and/or said usage tank and comprising:
- a flow distribution head (2) provided with an outlet fitting (3) and an inlet fitting (4) suitable to communicate directly or indirectly with said exhaust pipe of said grinding machine and/or with said usage tank in free contact with the environment, contact with said ophthalmic lens processing environment;
- an outer container (5) coupled to said distribution head (2) and having an inner volume (6) communicating with said inlet fitting (4);
- air purification means (7) arranged in said inner volume (6) of said outer container (5) and communicating with said inlet fitting (4);
- air filtering means (8), communicating with said outlet fitting (3) and arranged inside said outer container (5) and cooperating with said air purification means (7) in such a way as to receive from said purification means (7) said air coming from said inlet fitting (4) and yet purified by said air purification means (7);
- ventilation means (9) coupled to said air filtering means (8) and suitable to direct said purified air outside said flow distribution head (2) through said outlet fitting (3).
